# EUROPÄISCHE PATENTSCHRIFT

(11) **EP 4 433 706 B1**
(45) Veröffentlichungstag und Bekanntmachung des Hinweises auf die Patenterteilung: **18.02.2026**
(21) Anmeldenummer: 22818396.8
(22) Anmeldetag: 18.11.2022
(51) Int. Cl.: F04B 35/04, F04B 35/01, F04B 39/00, F04B 39/14

(54) **DRUCKLUFTBEREITSTELLUNGSSYSTEM**
COMPRESSED-AIR SUPPLY SYSTEM
SYSTÈME D'ALIMENTATION EN AIR COMPRIMÉ

(30) Priorität: 18.11.2021 DE 202021106288 U
(43) Veröffentlichungstag der Anmeldung: 25.09.2024
(73) Patentinhaber: Aircom Automotive Sp. z.o.o. Sp. K., 55-080 Pietrzykowice (PL)
(72) Erfinder: GSCHWENDER, Dominik, 8266 Steckborn (CH); JESKOWIAK, Jakub, 55-340 UJAZD GÓRNY (PL)
(74) Vertreter: DREISS Patentanwälte PartG mbB
(86) Internationale Anmeldenummer: PCT/EP2022/082399
(87) Internationale Veröffentlichungsnummer: WO 2023/089091

(56) Entgegenhaltungen:
- CN-U- 201 671 788
- CN-U- 201 679 677
- CN-Y- 2 313 074
- DE-A1- 3 617 474
- US-A- 5 111 713
- US-A1- 2015 330 379

## Beschreibung

Die Erfindung betrifft ein Druckluftbereitstellungssystem, insbesondere zum Bereitstellen von Luft für Reifen eines Kraftfahrzeugs.

Aus dem Stand der Technik sind Druckluftbereitstellungssysteme bekannt. Beispielsweise sind Druckluftbereitstellungssysteme bekannt, die über einen Dichtflüssigkeitsbehälter mit einem abzudichtenden Luftreifen verbindbar sind. Der Dichtflüssigkeitsbehälter wird beispielsweise mit einer Lufteinlassöffnung an einen Kompressor des Druckluftbereitstellungssystems angeschlossen und mit einer Auslassöffnung, über die ein Luft-/Dichtflüssigkeitsgemisch austreten kann, mit dem Reifen verbunden. Beim Betrieb des Kompressors tritt im an den Reifen angeschlossenen Zustand Dichtmittel in den Reifen ein, das eine Öffnung in dem Reifen verschließen kann und so eine Weiterfahrt nach einer Reifenpanne erlaubt, ohne dass ein Ersatzreifen montiert werden muss. Insbesondere kann durch solche Druckluftbereitstellungssysteme auf die Mitführung von Ersatzrädern verzichtet werden, wodurch das Platzangebot z.B. in einem Kofferraum eines Kraftfahrzeugs verbessert wird. Ein Druckluftbereitstellungssystem ist zum Beispiel aus Dokument CN 201 671 788 U bekannt.

Der Kompressor, insbesondere ein Verdichter des Kompressors, wird beispielsweise mit einem Elektromotor angetrieben, wobei der Verdichter einen in einem Zylinder geführten Kolben aufweist, der über ein Getriebe mit dem Elektromotor gekoppelt ist, wobei ein exzentrisch mit dem Kolben gekoppeltes Getriebezahnrad mit Auswuchtgewichten versehen ist, um den Kolben in seiner Hubbewegung zur Verdichtung der Luft anzutreiben.

Dabei ist im Stand der Technik bekannt, ein Auswuchtgewicht vorzusehen, das in einer Ausnehmung des Getriebezahnrads über eine Verschweißung gehalten ist. Hierzu weißt das Auswuchtgewicht zum Beispiel eine Öffnung auf, die durch einen Zapfen des Getriebezahnrads durchgriffen wird und der dann mittels Hitze verformt wird, so dass das Auswuchtgewicht in der Ausnehmung festgelegt ist. Nachteilig bei einer solchen Gestaltung ist, das eine Mehrzahl verschiedener Auswuchtgewichte vorgehalten werden müssen oder die Auswahl eher unflexibel ist. Insbesondere müssen diese Auswuchtgewichte spezifisch für den Anwendungsfall hergestellt werden.

Die Aufgabe der vorliegenden Erfindung ist es, eine einfache und flexible Lösung zum Auswuchten von Getriebezahnrädern bei Druckluftbereitstellungssystemen bereitzustellen.

Diese Aufgabe wird durch ein Druckluftbereitstellungssystem mit den Merkmalen des Anspruchs 1 gelöst. Dabei ist vorgesehen, dass das das mindestens ein Auswuchtgewicht in mindestens einer Aussparung des Getriebezahnrads rastend festgelegt sind, wobei das mindestens eine Auswuchtgewicht eine Kugellagerkugel ist. Auf diese Weise ist eine deutlich einfachere Verbindung möglich, die bereits über das Fügen der beiden Teile erfolgt und keinen zusätzlichen Verfahrensschritt wie ein Schweißen benötigt.

Der Antrieb des Verdichters erfolgt dabei über den Elektromotor, der über seine Motorwelle ein Antriebszahnrad antreibt, das mit dem Getriebezahnrad des Verdichters zusammenwirkt. An dem Getriebezahnrad ist dann der Kolben exzentrisch angelenkt, so dass die Drehung des Getriebezahnrads eine Hubbewegung des Kolbens im Zylinder bei jeder Umdrehung veranlasst, und so die im Zylinder befindliche Luft komprimiert. Diese kann dann als Druckluft durch eine Dichtmittelflasche hindurchleitet werden, wobei unter Mitnahme des Dichtmittels, diese dann in den Reifen eingeleitet wird und das Dichtmittel in diesen transportiert, wo es eine Öffnung abdichtet.

Nach der Erfindung ist das mindestens eine Auswuchtgewicht kugelförmig. Hierdurch wird der Vorteil erreicht, dass es sich besonders leicht rastend festlegen lässt, ohne dass beim Verrasten die Form berücksichtigt werden muss, da jede Einbaulage gleich ist. Fehleinbauten werden vermieden.

Nach der Erfindung ist das mindestens eine Auswuchtgewicht eine Kugellagerkugel. Hierbei können insbesondere solche Kugellagerkugeln verwendet werden, die den Ansprüchen für den Einsatz in Kugellagern nicht genügen. Auf diese Weise kann ein weiterer Einsatzbereich für diese gefunden werden und die eingesetzten Auswuchtgewichte sind vergleichsweise günstig. Besonders gut lässt sich das Auswuchten realisieren, wenn mehrere Auswuchtgewichte, insbesondere drei Auswuchtgewichte vorgesehen sind. Durch die Vorsehung von mehreren Auswuchtgewichten, wird die Flexibilität weiter erhöht. Insbesondere können die Gewichte so miteinander kombiniert und angeordnet werden, dass sich der gewünschte Effekt ergibt. Besonders vorteilhaft ist auch, dass die Möglichkeit besteht, nur eine Art von Auswuchtgewichten von gleicher Art und Gewicht zu verwenden, insbesondere Kugellagerkugeln. Hierbei können insbesondere solche verwendet werden, die die hohen Anforderungen für den Einsatz in Kugellagern nicht erfüllen. Auch dies verringert Einbaufehler. Alternativ sind aber auch voneinander verschiedene Auswuchtgewichte denkbar, die gemeinsam verwendet werden.

Bevorzugt kann vorgesehen sein, wenn das mindestens eine Auswuchtgewicht zur Achse des Getriebezahnrads der Anlenkung des Kolbens gegenüberliegend angeordnet ist und so das Gegengewicht hierzu bildet. Besonders bevorzugt kann vorgesehen sein, dass das mindestens eine Auswuchtgewicht punktsymmetrisch gegenüberliegend zur Anlenkung des Kolbens angeordnet ist und/oder um diese Stellung herum angeordnet ist, wenn mehrere Auswuchtgewichte verwendet werden und diese vorzugsweise symmetrisch zu der punktsymmetrischen Position angeordnet sind. Hierdurch kann eine besonders gleichmäßige Verteilung des Gegengewichts erreicht werden.

Eine besonders einfache Aufnahme der Auswuchtgewichte kann erreicht werden, wenn die mindestens eine Aussparung kuchenstückartig (trapezoid) ist und mit Rastelementen ausgestattet ist. In solchen geometrischen Aussparungen können insbesondere kugelförmige Auswuchtgewichte sicher und einfach aufgenommen und gehalten werden. Dabei können die Rastelemente vorzugsweise an den beiden nicht aufeinander zu laufenden Seiten der Aussparung vorgesehen sein.

Weiterhin ist bevorzugt vorgesehen, dass je Auswuchtgewicht eine Aussparung vorgesehen ist, in der es rastend gehalten ist. Dadurch kann die Flexibilität weiter erhöht werden, da die einzelnen Auswuchtgewichte unabhängig voneinander sind.

Das Getriebezahnrad kann dabei vorzugsweise aus Kunststoff bestehen und die Rastelemente für das mindestens eine Auswuchtgewicht können einstückig mit dem Getriebezahnrad verbunden sind.

Die Auswuchtgewichte bestehen vorzugsweise aus einem metallischen Werkstoff, vorzugsweise aus Stahl.

Schließlich kann vorgesehen sein, dass das Getriebezahnrad die Aussparungen begrenzende Rippen aufweist, die sich aus einer der Stirnflächen des Getriebezahnrads erheben. Hierdurch kann die Führung des mindestens einen Auswuchtgewichts weiter verbessert werden und das mindestens eine Auswuchtgewicht wird sicher gehalten.

Aus Gewichtsgründen oder statischen Gründen können weitere Aussparungen im Zahnrad oder auch Rippen oder Nuten in den Stirnflächen vorgesehen sein, die das Zahnrad ganz oder teilweise durchgreifen können.

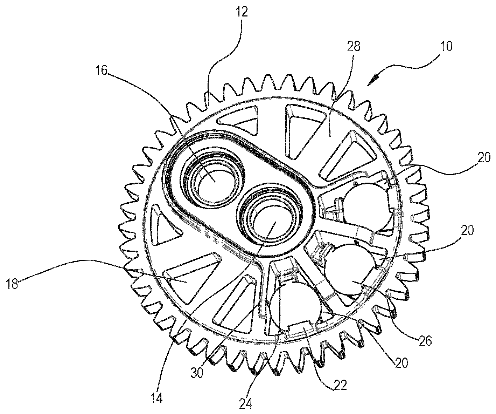

Weitere Vorteile und Merkmale ergeben sich aus der nachfolgenden Beschreibung eines Ausführungsbeispiels, das in der einzigen Figur dargestellt ist.

Dabei zeigt die einzige Figur ein Getriebezahnrad 10, das auf seiner äußeren Mantelfläche eine übliche Verzahnung 12 aufweist. Das Getriebezahnrad 10 weist ferner eine zentrische Öffnung 14 auf, über die es mit einer Motorwelle (nicht dargestellt) eines Elektromotors zusammenwirkt und über diese drehend angetrieben wird. Darüber hinaus weist das Getriebezahnrad 10 eine weitere Öffnung 16 auf, in der eine Aufnahme für einen Kolben (nicht dargestellt) zum Verdichten von Luft für ein Druckluftbereitstellungssystem vorgesehen sein kann. Das Getriebezahnrad 10 ist Teil des Verdichters eines Kompressors des Druckluftbereitstellungssystems. Die Anlenkung für den Kolben erfolgt dabei außermittig, also exzentrisch.

Darüber hinaus weist das Getriebezahnrad 10 eine Reihe von Aussparungen 18 sowie 20 auf, wobei drei Aussparungen 20 vorgesehen sind, die bezüglich der zentrischen Öffnung 14 der Aufnahme 16 für den Kolben punktsymmetrisch gegenüberliegen bzw. beidseits der Punktsymmetrielinie angeordnet sind. Die Aussparungen 20 sind dabei kuchenstückförmig oder trapezoid gestaltet und weisen an ihren nach radial innen und radial außen weisenden nicht aufeinander zu laufenden Seiten jeweils Rastelemente 22 und 24 auf. Mittels dieser Rastelemente 22,24 können kugelförmige Auswuchtgewichte 26 in den Aussparungen 20 rastend festgelegt werden. Als Auswuchtgewichte 26 finden hier, insbesondere Kugellagerkugeln Verwendung, die aus Stahl bestehen können. Das Getriebezahnrad 10 selbst ist als Kunststoffzahnrad ausgebildet. Die Auswuchtgewichte 26 können manuell in die Aussparungen 20 eingeclipst werden und werden dann mittels der Rastelemente 22 und 24 in den Aussparungen 20 gehalten.

Durch die Anordnung auf sowie beidseitig der Punktsymmetrielinie wird ein besonders gleichmäßiges Auswuchten der Exzentrizität bereitgestellt.

Darüber hinaus weist die in der Zeichnungsebene nach oben weisende Stirnfläche 28 des Getriebezahnrads 10 Rippen 30 auf, die jeweils beidseits der Aussparungen 20 angeordnet sind und neben einem stabilisierenden Effekt auch die Halterung der Auswuchtgewichte 26 unterstützen. Die Rippen 30 können dabei verschieden breit ausgebildet sein, auch um die Stabilität des Getriebezahnrads 10 optimal auszubilden.

Auf die beschriebene Weise kann besonders einfach ein Auswuchten des Getriebezahnrads 10 bei einem Druckluftbereitstellungssystem realisiert werden, wobei eine individuelle und flexible Anpassung der Auswuchtgewichte 26 einfach realisiert werden kann und insbesondere Ausschusskugellagerkugeln hierzu kostengünstig eingesetzt werden können.

## Patentansprüche

1. Druckluftbereitstellungssystem, insbesondere zum Bereitstellen von Luft für Reifen eines Kraftfahrzeugs, umfassend einen Kompressor mit einem Elektromotor, insbesondere zum Antreiben eines Verdichters des Kompressors, wobei der Verdichter einen in einem Zylinder geführten Kolben aufweist, der über ein Getriebe mit dem Elektromotor gekoppelt ist, wobei ein exzentrisch mit dem Kolben gekoppeltes Getriebezahnrad (10) mit Auswuchtgewichten (26) versehen ist, wobei das mindestens eine Auswuchtgewicht (26) in mindestens einer Aussparung (20) des Getriebezahnrads (10) rastend festgelegt sind, **dadurch gekennzeichnet, dass** das mindestens eine Auswuchtgewicht (26) eine Kugellagerkugel ist.

2. Druckluftbereitstellungssystem nach einem der vorangehenden Ansprüche, **dadurch gekennzeichnet, dass** mehrerer Auswuchtgewichte (26), insbesondere drei Auswuchtgewichte (26) vorgesehen sind.

3. Druckluftbereitstellungssystem nach einem der vorangehenden Ansprüche, **dadurch gekennzeichnet, dass** das mindestens eine Auswuchtgewicht (26) zur Achse des Getriebezahnrads (10) der Anlenkung (16) des Kolbens gegenüberliegend angeordnet ist.

4. Druckluftbereitstellungssystem nach einem der vorangehenden Ansprüche, **dadurch gekennzeichnet, dass** das mindestens ein Auswuchtgewicht (26) punktsymmetrisch gegenüberliegend Anlenkung (16) des Kolbens angeordnet ist und/oder um diese Stellung herum angeordnet sind, vorzugsweise symmetrisch zu der punktsymmetrischen Position angeordnet sind.

5. Druckluftbereitstellungssystem nach einem der vorangehenden Ansprüche, **dadurch gekennzeichnet, dass** die mindestens eine Aussparungen (20) kuchenstückartig ist und mit Rastelementen (22,24) ausgestattet ist.

6. Druckluftbereitstellungssystem nach einem der vorangehenden Ansprüche, **dadurch gekennzeichnet, dass** je Auswuchtgewicht (26) eine Aussparung (20) vorgesehen ist, in der es rastend gehalten ist.

7. Druckluftbereitstellungssystem nach einem der vorangehenden Ansprüche, **dadurch gekennzeichnet, dass** das Getriebezahnrad (10) aus Kunststoff besteht und die Rastelemente (22,24) für das mindestens eine Auswuchtgewicht (26) einstückig mit dem Getriebezahnrad (10) verbunden sind.

8. Druckluftbereitstellungssystem nach einem der vorangehenden Ansprüche, **dadurch gekennzeichnet, dass** das Getriebezahnrad (10) die Aussparungen (20) begrenzende Rippen (30) aufweist, die sich aus der Stirnfläche (28) des Getriebezahnrads (10) erheben.

## Claims

1. A compressed-air supply system, in particular for supplying air for tires of a motor vehicle, comprising a compressor having an electric motor, in particular for driving a compressor unit of the compressor, wherein herein the compressor unit has a piston guided in a cylinder, which piston is coupled to the electric motor via a gearing, wherein a gearwheel (10) which is coupled eccentrically to the piston is provided with balancing weights (26), wherein the at least one balancing weight (26) is snap-fitted in at least one recess (20) of the gearwheel (10), **characterized in that** the at least one balancing weight (26) is a bearing ball.

2. The compressed-air supply system according to any of the preceding claims, **characterized in that** a plurality of balancing weights (26), in particular three balancing weights (26), are provided.

3. The compressed-air supply system according to any of the preceding claims, **characterized in that** the at least one balancing weight (26) is arranged opposite the axis of the gearwheel (10) of the linkage (16) of the piston.

4. The compressed-air supply system according to any of the preceding claims, **characterized in that** the at least one balancing weight (26) is arranged point-symmetrically opposite the linkage (16) of the piston and/or is arranged around this position, preferably symmetrically to the point-symmetrical position.

5. The compressed-air supply system according to any of the preceding claims, **characterized in that** the at least one recesses (20) is pie-slice-shaped and is equipped with latching elements (22, 24).

6. The compressed-air supply system according to any of the preceding claims, **characterized in that** one recess (20) is provided per balancing weight (26), in which recess said weight is held in a latching manner.

7. The compressed-air supply system according to any of the preceding claims, **characterized in that** the gearwheel (10) consists of plastics material, and the latching elements (22, 24) for the at least one balancing weight (26) are integrally connected to the gearwheel (10).

8. The compressed-air supply system according to any of the preceding claims, **characterized in that** the gearwheel (10) has ribs (30) which delimit the recesses (20) and rise from the end face (28) of the gearwheel (10).

## Revendications

1. Système de fourniture d'air comprimé, en particulier pour la fourniture d'air pour des pneus d'un véhicule automobile, comprenant un compresseur comportant un moteur électrique, en particulier pour l'entraînement d'un moyen de compression du compresseur, dans lequel le moyen de compression présente un piston guidé dans un cylindre, lequel piston est accouplé au moteur électrique par l'intermédiaire d'un engrenage, dans lequel une roue dentée d'engrenage (10) accouplée de manière excentrée au piston est pourvue de masselottes d'équilibrage (26), dans lequel l'au moins une masselotte d'équilibrage (26) est fixée par encliquetage dans au moins un évidement (20) de la roue dentée d'engrenage (10),
**caractérisé en ce que** l'au moins une masselotte d'équilibrage (26) est une bille de roulement à billes.

2. Système de fourniture d'air comprimé selon l'une des revendications précédentes, **caractérisé en ce que** plusieurs masselottes d'équilibrage (26), en particulier trois masselottes d'équilibrage (26), sont prévues.

3. Système de fourniture d'air comprimé selon l'une des revendications précédentes, **caractérisé en ce que** l'au moins une masselotte d'équilibrage (26) est disposée en face de l'axe de la roue dentée d'engrenage (10) de l'articulation (16) du piston.

4. Système de fourniture d'air comprimé selon l'une des revendications précédentes, **caractérisé en ce que** l'au moins une masselotte d'équilibrage (26) est disposée en face de l'articulation (16) du piston avec une symétrie ponctuelle et/ou sont disposées autour de cette position, de préférence sont disposées symétriquement par rapport à la position à symétrie ponctuelle.

5. Système de fourniture d'air comprimé selon l'une des revendications précédentes, **caractérisé en ce que** l'au moins un évidements (20) est en forme de morceau de gâteau et est équipé d'éléments d'encliquetage (22, 24).

6. Système de fourniture d'air comprimé selon l'une des revendications précédentes, **caractérisé en ce qu'**est prévu, pour chaque masselotte d'équilibrage (26), un évidement (20) dans lequel elle est maintenue par encliquetage.

7. Système de fourniture d'air comprimé selon l'une des revendications précédentes, **caractérisé en ce que** la roue dentée d'engrenage (10) est constituée de matière plastique et les éléments d'encliquetage (22, 24) pour l'au moins une masselotte d'équilibrage (26) sont reliés d'un seul tenant à la roue dentée d'engrenage (10).

8. Système de fourniture d'air comprimé selon l'une des revendications précédentes, **caractérisé en ce que** la roue dentée d'engrenage (10) présente des nervures (30) délimitant les évidements (20), lesquelles se dressent à partir de la face frontale (28) de la roue dentée d'engrenage (10).
